Europäisches Patentamt

European Patent Office

Office européen des brevets

(11) Numéro de publication : **0 433 352 B1**

(12) **FASCICULE DE BREVET EUROPEEN**

(45) Date de publication du fascicule du brevet :
**15.07.92 Bulletin 92/29**

(21) Numéro de dépôt : **89910107.5**

(22) Date de dépôt : **04.09.89**

(86) Numéro de dépôt international :
**PCT/FR89/00443**

(87) Numéro de publication internationale :
**WO 90/02529 22.03.90 Gazette 90/07**

(51) Int. Cl.⁵ : **A61C 8/00**

(54) **SYSTEME IMPLANTABLE ET DISPOSITIF ROTATIF.**

(30) Priorité : **02.09.88 FR 8811615**
**25.04.89 FR 8905576**

(43) Date de publication de la demande :
**26.06.91 Bulletin 91/26**

(45) Mention de la délivrance du brevet :
**15.07.92 Bulletin 92/29**

(84) Etats contractants désignés :
**BE CH DE GB IT LI**

(56) Documents cités :
**DE-A- 2 413 883**
**DE-A-29 203 35**

(56) Documents cités :
**GB-A- 2 199 502**
**GB-A- 2 199 626**
**GB-A-21 767 09**
**US-A- 4 713 004**

(73) Titulaire : **POULMAIRE, Francis**
**23, rue de la Republique**
**F-84000 Avignon (FR)**

(72) Inventeur : **POULMAIRE, Francis**
**23, rue de la Republique**
**F-84000 Avignon (FR)**

(74) Mandataire : **Bugnon-Hays, Claudine**
**PATCO S.A. 39, Boulevard René Cassin B.P.4**
**F-84170 Monteux (FR)**

## Description

La présente invention concerne un système implantable avec ou sans résilience, vissé et autotaraudant ou impacté dont la vocation est de remplacer un organe dentaire, un dispositif rotatif pour la conception de la loge implantaire, le procédé d'utilisation dudit système implantable.

Jusqu'à ce jour, quelles que soient les techniques proposées les implants se comportent dans les maxillaires comme des corps inertes, transmettant directement aux cellules osseuses des chocs plus ou moins grands, plus ou moins nocifs, qui dans le temps, entraînent un épaississement progressif de la couche de protéoglycanes à l'interface os/implant provocant l'apparition de tissus fibreux ou osseux néo-formés. De plus, l'expérience clinique montre que la combinaison prothétique alliant un pilier implantaire artificiel sans résilience au pilier dentaire naturel et résilient, génère des descellements des prothèses, et même des fractures soit au niveau des posts implantaires, soit au niveau des piliers naturels.

En d'autres termes, les praticiens disposent actuellement d'implants en titane, en oxyde d'aluminium ou autres biomatériaux, ces implants supportant des prothèses unitaires ou bridges, ou prothèses adjointes.

La mise en fonctionnement de l'ensemble déclenchent à plus ou moins brève échéance une lyse de l'os et son remplacement par un tissu atypique.

Cette dégénerescence est en grande partie imputable à l'absence de ligament alvéolo-implantaire s'opposant aux chocs transmis par la mandibule ou le maxillaire pendant la mastication, la déglutition et même la phonation. Malgré de nombreuses tentatives d'amélioration, les systèmes actuels n'échappent pas à ces nombreux inconvénients, à savoir :
– destruction de l'os maxillaire récepteur,
– nécrose thermique par échauffement de l'outil de forage,
– interface os/implant insuffisante pour équilibrer les contraintes mécaniques.

Le but de la présente invention est de remédier à ces inconvénients en proposant un système implantable ayant le double avantage de s'intégrer parfaitement à l'os maxillaire et d'assurer une certaine "mobilité physiologique" analogue à celle de l'organe dentaire. Il est évident que les prothèses dentaires auront une durée de vie nettement supérieure.

Un autre but de l'invention est de remédier à la nécrose thermique par échauffement des cellules osseuses lors de la conception de la loge implantaire destinée à recevoir ledit système implantable, à l'aide d'un dispositif rotatif à irrigation interne. La loge ainsi obtenue pourra recevoir soit un implant vissé et autotaraudant dans les cas de remparts osseux épais, supportant les tensions du taraudage, soit un implant impacté dans le cas de murs osseux plus étroits.

A cet effet, l'invention a d'abord pour objet un système implantable support de prothèse dentaire du type comportant d'une part un corps d'implant constitué par un tube cylindrique plein présentant un filetage interne communicant avec l'ouverture supérieure dudit corps d'implant, combiné à un mécanisme six pans asymétriques femelle et d'autre part, une tête d'implant destinée à être vissée dans ledit filetage interne du corps d'implant.

La présence d'un mécanisme six pans asymétriques combiné au filetage interne dudit corps d'implant, permet de placer dans ce puits un dispositif de positionnement de l'implant dans l'os d'une part, et, d'autre part, de visser ou de sceller par la suite des inserts prothétiques. L'asymétrie du six pans garantit de retrouver lors des manipulations du laboratoire de prothèse, la position exacte de l'insert prothétique.

Le corps de l'implant comporte dans la plus grande partie inférieure un évidement occupant toute la largeur dudit corps d'implant et le maximum de la hauteur comprise entre le fond dudit filetage interne combiné au mécanisme six pans asymétriques et la partie apicale dudit tube cylindrique ; chacun des bords verticaux de cette partie évidée est constitué par un méplat.

L'objectif d'un vide maximum à l'intérieur dudit corps d'implant par l'intermédiaire de la large partie évidée consiste à disposer d'une masse métallique minimum dans ladite loge implantaire, le vide maximum étant comblé par la régénération osseuse au cours de la cicatrisation de l'os.

La présence desdits méplats complétera le clavetage dudit corps d'implant au sein des tissus osseux.

Dans une forme de réalisation de l'invention, ledit corps d'implant se présente sous la forme d'un cylindre comportant un filetage extérieur. Ledit filetage extérieur dudit tube cylindrique présente un pas de vis égal au moins à 1,25 mm.

Ledit corps d'implant sera alors vissé et la légère surdimension dudit filetage assurera un autotaraudage.

Dans une autre réalisation de la présente invention, le filetage extérieur du corps d'implant est constitué par une série d'épaulements superposés. De cette manière, l'implant est impacté directement dans la mâchoire lorsqu'il n'y a pas suffisamment d'os pour permettre le visage.

Dans un mode préféré de réalisation de l'invention, ledit corps d'implant est combiné avec une tête d'implant munie d'au moins deux éléments amortisseurs jouant le rôle d'un dispositif à résilience compensant l'absence d'un ligament alvéolo-implantaire et minimisant ainsi l'effet nocif des stress mécaniques.

De cette manière, l'invention propose soit un système implantable sans résilience, réalisant uniquement une parfaite intégration du corps d'implant dans la loge implantaire, soit un système implantable à résilience dû à la présence d'au moins deux éléments amortisseurs le long de ladite tête d'implant. Enfin, on opte lors de la mise à nu du site osseux soit pour la forme vissée et autotaraudante, soit pour la forme impactée.

Une autre caractéristique de la présente invention réside dans la conception de la loge implantaire préalablement au vissage dudit corps d'implant. En effet, pour que l'ostéogénèse à l'intérieur de la partie évidée dudit tube cylindrique se réalise, il faut que les cellules osseuses présentes dans ladite loge implantaire soient vivantes et aptes à se régénérer. Or, les procédés classiques de forage provoquent un échauffement allant jusqu'à 70°C sur les cellules osseuses et créent ainsi des lésions irréversibles.

Par conséquent, la présente invention propose un matériel rotatif pour la conception d'une loge implantaire parfaitement cylindrique, constitué d'un foret muni intérieurement d'un canal d'irrigation.

Le foret permet le perçage en direct des os et matières osseuses sans risque d'échauffement ; il est muni d'un système permettant une irrigation à coeur, abondante. Lors du forage de ladite loge implantaire destinée à recevoir ledit corps d'implant, on fait passer dans ledit canal d'irrigation du matériel rotatif, un liquide de refroidissement stérile réfrigéré, la vitesse de rotation lors du forage étant très basse à savoir environ 400 à 500 tours/minute.

Enfin le système implantable selon la présente invention peut être utilise de plusieurs manières.

Selon un premier mode, l'implant étant vissé et autotaraudant :

– on met en place dans le puits fileté à six pans dudit corps d'implant un mandrin à six pans mâle. Ledit mandrin est ensuite actionné par une clef à cliquet réalisant ainsi le vissage de l'implant. Des repères sur le mandrin à six pans permettent de repérer l'orientation de l'évent dudit corps d'implant dans le sens antéro-postérieur par rapport à l'os maxillaire de manière à n'entraver ni sa restructuration ni se vascularisation.

Selon un deuxième mode, l'implant étant impacté :

– on utilise un impacteur, soit une tige métallique dont l'extrémité pénètre dans le puits du corps de l'implant et étant munie d'un matériau amortisseur. Ainsi, à coups de maillet chirurgical, très doux, l'implant gagne le fond de la loge implantaire.

Dans les deux formes de réalisation du système implantable selon l'invention, on visse dans l'ouverture supérieure dudit corps d'implant une tête d'implant sur laquelle on fixe ladite prothèse dentaire.

D'autres avantages et réalisations de l'invention ressortiront de la description qui va suivre, faite en référence aux dessins en annexe sur lesquels on peut voir :

– figure 1 : une vue d'ensemble du corps de l'implant vissé selon la présente invention ;

– figure 2 : vue en coupe selon l'axe A.A de la figure 1 ;

– figure 3 : une vue d'ensemble du corps d'implant impacté selon l'invention ;

– figure 4 : vue en coupe selon l'axe A.A de la figure 3 ;

– figure 5 : une vue de dessous dudit corps d'implant (fig. 1 et fig. 3) ;

– figure 6 : vue en détail des spires du filetage extérieur du corps d'implant vissé et autotaraudant suivant l'invention ;

– figure 7 : vue en détail de la série d'épaulements superposés du corps d'implant impacté suivant l'invention ;

– figure 8 : vue en perspective du dispositif six pans mâle selon l'invention ;

– figure 9 : vue du système implantable en place muni de la prothèse dentaire ;

– figure 10 : vue d'ensemble et en coupe A.A du matériel rotatif selon l'invention ;

– figure 11 : vue de face d'un système implantable dans la technique des édentés totaux ;

– figure 12 : vue d'un implant juxta-osseux selon un autre mode de réalisation de l'invention.

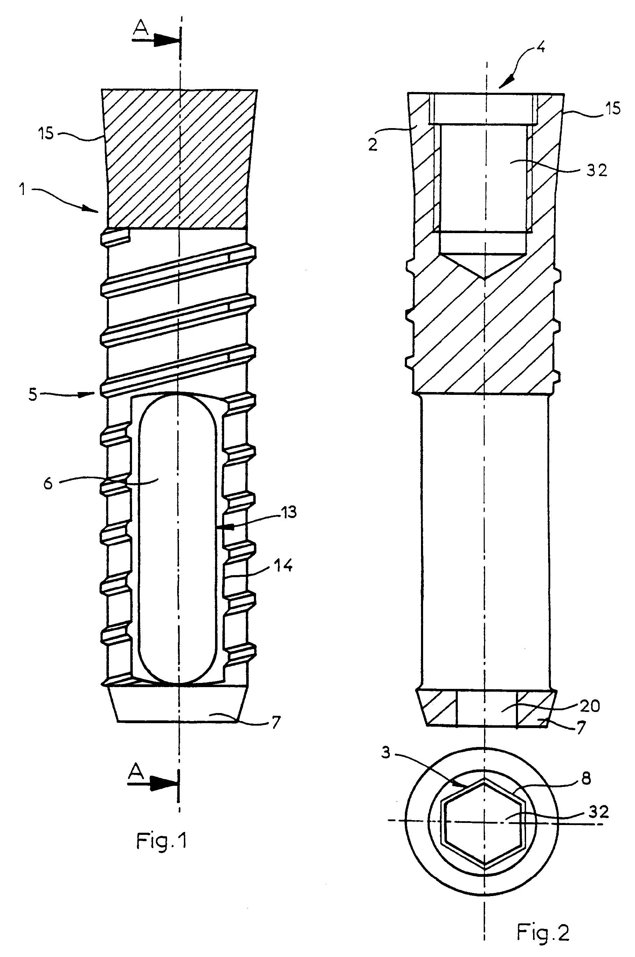

Comme représenté sur les figures 1 à 4, le système implantable de support pour prothèse dentaire selon l'invention, comporte d'une part, un corps d'implant (1) constitué par un tube cylindrique (2) plein agrémenté d'un filetage interne (3) dans son ouverture supérieure (4) combiné à un mécanisme six pans femelle (8) et, d'autre part un filetage extérieur (5) dans le cas d'implant vissé présentant un pas de vis au moins égal à 1,25 mm, ou une série d'épaulements superposés (12).

La fixation de l'implant dans l'os maxillaire est alors réalisée par un impactage du fait du relief desdits épaulements (12). De cette manière les parois de la loge implantaire sont moins sollicitées, ce qui évite la fragilisation ou la fissuration de l'os maxillaire.

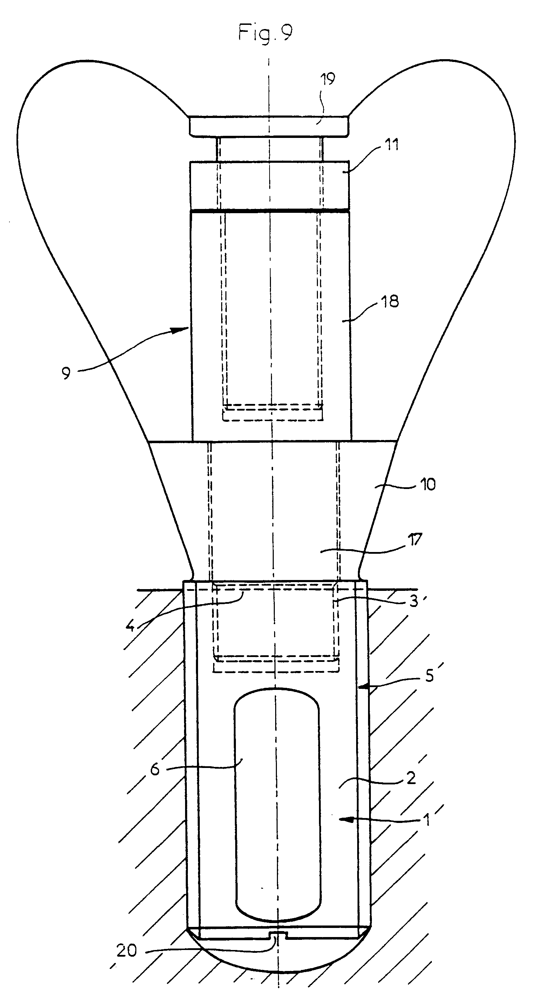

D'autre part, une tête d'implant (9) telle que représentée sur la figure 9 est destinée à être vissée ou scellée dans ledit filetage interne (3) du corps d'implant (1) tandis que ledit tube cylindrique (2) présente une partie évidée (6) occupant toute la largeur dudit tube cylindrique (2) et le maximum de la hauteur comprise entre le fond dudit filetage interne (3) et la partie apicale (7) dudit tube cylindrique (2) ménageant aussi deux ouvertures communicantes et face à face le long dudit tube (2).

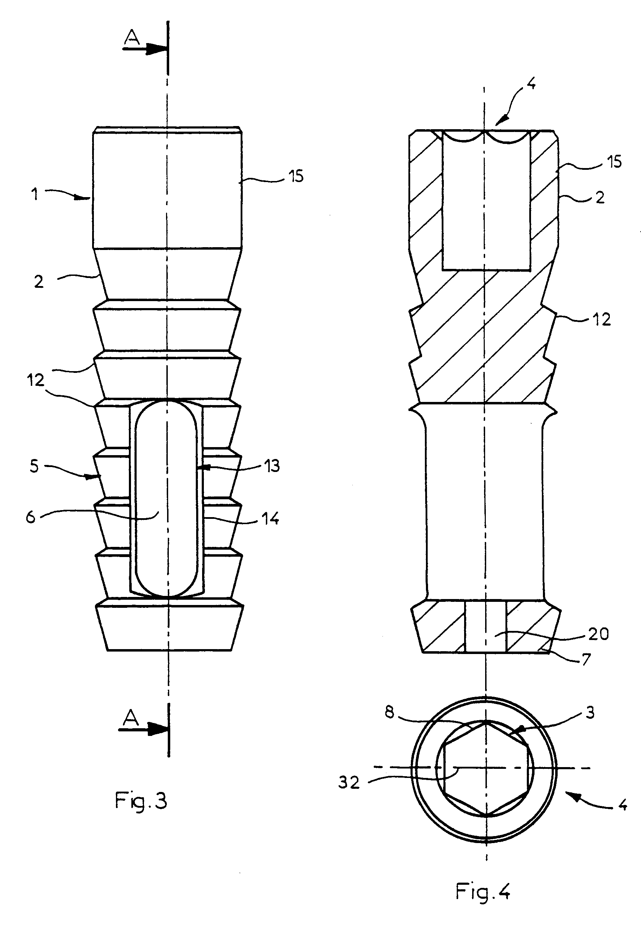

Ces deux ouvertures communicantes (figures 1 et 3) sont limitées par des bords verticaux (13) qui auraient pu constituer des parties irritantes vis à vis de l'environnement biologique, aussi sont-ils agrémentés par des méplats (14). De cette manière, les bords verticaux (13) ne râpent plus la paroi osseuse et l'ostéogénèse est exclusivement réalisée par le coagulum présent à l'intérieur de la partie évidée (6).

De plus, cette partie évidée (6) communique avec le fond de la loge implantaire par un orifice de décompression (20) (figures 2 et 4) aménagé au niveau de la partie apicale (7) dudit corps d'implant facilitant la pénétration du caillot dans la partie évidée (6).

Cedit corps d'implant (1) tel que représenté sur la figure 1 ou 3, peut être combiné à une tête d'implant non résiliente connue des praticiens et constituée par exemple de faux-moignons métalliques classiques en forme tronconique, vissés dans ledit corps d'implant (1).

Cependant, dans le mode préféré de réalisation de l'invention, cedit corps d'implant (1) est combiné à une tête d'implant (9) telle que représentée sur la figure 9, munie d'au moins deux éléments amortisseurs (10,11).

Dans la forme de réalisation de l'implant, vissé et autoraraudant, ledit corps d'implant (1) est fixé immédiatement et mécaniquement dans ladite loge osseuse implantaire. On connait déjà des corps d'implance dans l'art antérieur, présentant un filetage extérieur, dont le pas de vis est très serré. Ceci a pour inconvénient de provoquer un différentiel électrique de surface très important, entre le sommet de la spire et le fond de la spire, susceptible d'entraîner des phénomènes de corrosion nocifs pour l'équilibre cellulaire. Afin de remédier à cet inconvénient l'invention propose un corps d'implant (1) dont le filetage extérieur (5) dudit tube cylindrique (2) présente un pas de vis très large d'au moins 1,25 mm. De cette manière, le phénomène d'aération différentielle de surface est nettement diminué voire supprimé.

Dans le mode préféré de réalisation de l'invention, ledit filetage extérieur (5) dudit tube cylindrique (2) débute à au moins 2, 3 mm sous l'ouverture supérieure (4) dudit tune cylindrique (2) afin de ménager une partie extérieure supérieure (15) lisse dont l'état de surface est poli-miroir.

Cette dite partie extérieure supérieure (15) non filetée est de forme légèrement évasée vers le haut pour faciliter le blocage supplémentaire dudit corps d'implant (1), ladite loge implantaire ou puits d'ancrage osseux de l'implant pouvant être d'une dimension supérieure dans sa partie toute supérieure du fait des risques d'imperfection lors du forage.

De même afin d'améliorer la fixation primaire mécanique de l'implant, ledit filetage extérieur (5) est légèrement surdimensionné par rapport à la dimension de ladite loge implantaire obtenue avec le foret décrit ci-après.

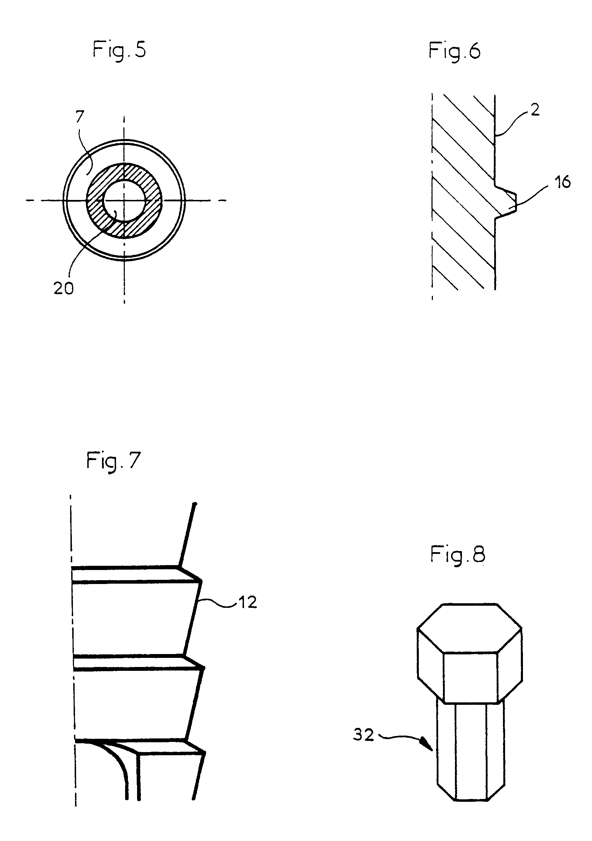

Enfin cedit filetage extérieur (5) est constitué de spires (16) comme représenté à la figure 6. La pointe est tronquée pour former un bord vertical afin d'éviter la constitution de pics électriques nocifs vis à vis de l'environnement biologique.

Dans la forme de réalisation de l'implant impacté, la série d'épaulements superposés (12) présente un relief particulier (figure 7). En effet, chaque épaulement (12) est constitué par un pan très court dirigé vers le haut et s'opposant à la désinsertion de l'implant d'une part, et d'autre part avec un pan à direction inférieure beaucoup plus large qui transmettra les charges de la mastication sur un volume osseux plus important.

Toutes ces caractéristiques décrites ci-dessus concourrent à la réalisation d'un contact intime entre la surface osseuse et ledit corps d'implant (1) permettant une bio-intégration à l'interface os/implant.

Dans une mode préféré de réalisation de l'invention, ledit corps d'implant (1) est conçu en titane commercialement pur, ou tout autre biomatériau aux propriétés biologiques, chimiques et physiques compatibles avec l'environnement biologique.

D'autre part, un autre objet de l'invention consiste à assurer une certaine "mobilité physiologique" du système implantable, desbiné à supporter une prothèse dentaire.

Pour ce faire, il convient non seulement que ledit corps d'implant (1) tel que précédemment décrit, présente une structure permettant une intégration efficace dudit corps d'implant (1) avec l'os maxillaire, mais également que ladite tête d'implant (9) supportant la prothèse soit résiliente. A cet effet, ladite tête d'implant résiliente (9) selon l'invention, est constituée d'une base cylindrique (17) taraudée dans sa partie inférieure (figure 9) destinée à être vissée dans ledit filetage interne (3) dudit corps d'implant (1) surmontée d'un moignon cylindrique (18) de support de prothèse muni d'au moins deux éléments amortisseurs (10, 11). Cette dite tête d'implant résiliente (9) doit, pour être efficace, jouer le rôle d'un véritable amortisseur des stress occlusaux, lors de la mastication ou de la déglutition, et reposer sur un corps d'implant (1) bien fixe.

De façon plus précise, selon la figure 9, ladite tête d'implant résiliente (9) est munie d'un premier élément amortisseur (10) constitué d'une bague en tronc de cône renversée entourant la partie cylindrique non taraudée de ladite base cylindrique (17) tandis qu'un second élément amortisseur (11) constitué par un anneau est disposé au-dessus dudit moignon cylindrique (18) de support de prothèse, entourant ainsi la tête de la vis de fixation (19) de la suprastructure prothétique, cette dite vis de fixation (19) étant vissée dans le filetage interne dudit moignon cylindrique (18).

De ce fait, l'amortissement lors des stress occlusaux, se fait au-dessus de l'os par l'intermédiaire desdits éléments amortisseurs (10,11) avant de se faire dans l'os maxillaire. Cesdits éléments amortisseurs (10,11) sont d'une épaisseur et de consistance variables en fonction de la pression masticatoire du patient et de la dent à remplacer.

Les pressions masticatoires de chaque patient pourront être mesurees en bouche afin de déterminer le choix de la qualité et de l'épaisseur du matériau pouvant assurer le meilleur amortissement. De même, la hauteur dudit moignon cylindrique (18) de support de prothèse est variable en fonction des hauteurs prothétiques à réaliser. Cesdits éléments amortisseurs (10,11) sont réalisés en P.C.T.F.E. (polymère chlorotrifluoro éthylène) ou autres matériaux compressibles dont l'épaisseur déterminée et la compressibilité se rapprochent de la mobilité physiologique d'une dent naturelle.

Cette tête d'implant à résilience (9) selon 9 la figure est conçue préférentiellement en titane et est adaptable à tout autre type de corps d'implant respectant la technique de mise en place dudit corps d'implant, c'est-à-dire ayant recours à un système de vissage.

L'invention a également pour objet un matériel rotatif pour la conception de la loge implantaire parfaitement cylindrique, destinée à loger ledit corps d'implant (1).

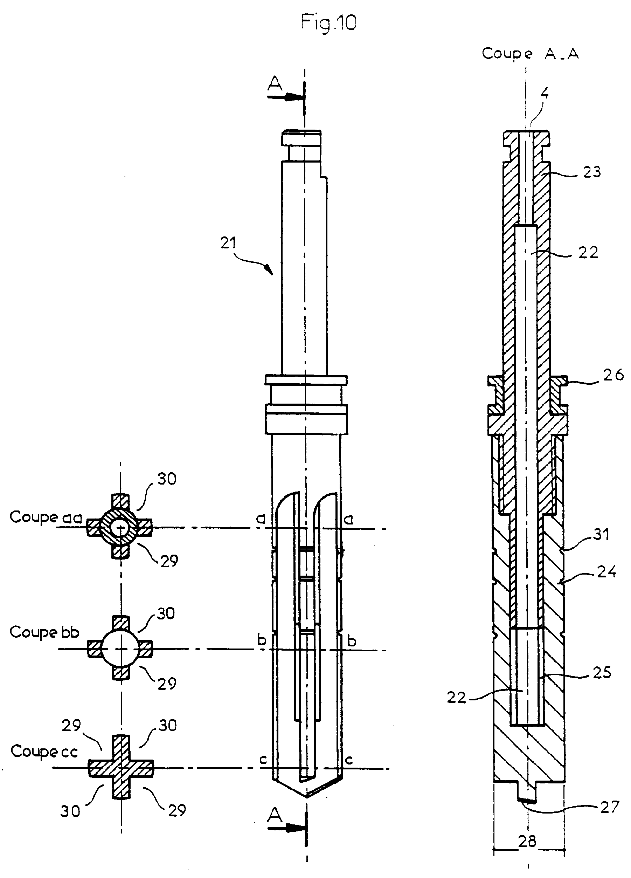

Comme présenté sur la figure 10, l'invention propose une matériel rotatif constitué d'un foret (21) muni intérieurement d'un canal d'irrigation (22) appelé foret à langue d'aspic cruciforme à irrigation interne. De façon plus précise, cedit foret (21) est constitué d'un mandrin (23) dont la partie inférieure est recouverte d'un cylindre (24) évidé de façon à présenter une section transversale cruciforme destinée à concevoir une loge osseuse parfaitement cylindrique.

De plus, cedit mandrin (23) est muni intérieurement sur toute sa longueur, d'un canal d'irrigation (22) débouchant dans la partie ajourée (25) dudit cylindre (24). La partie inférieure dudit cylindre évidé (24) cruciforme se termine par des biseaux (27,28) dont l'inclinaison assure une véritable coupe de l'os.

Ainsi, les copeaux d'os prélevés remontent dans les deux quadrants (29) diamétralement opposés, alors que le liquide de refroidissement circulera dans les deux autres (30).

L'avantage de cedit canal interne d'irrigation (22) réside dans le fait que lors du procédé d'utilisation de cedit matériel rotatif, pour le forage de la loge implantaire cylindrique, on fait passer dans ledit canal d'irrigation (22) débouchant dans la partie ajourée (25) dudit cylindre (24), un liquide de refroidissement stérile et réfrigéré à environ 2 à 3° C.

De cette manière, l'échauffement des cellules osseuses est supprimé, ce qui évite des lésions irréversibles et permet, par conséquent, une ostéogénèse à l'intérieur de ladite partie évidée (6) dudit corps d'implant (1) logé dans ladite loge implantaire par vissage. Le rebord extérieur des lames réalisant la partie cruciforme du corps du foret (23) présente des repères de forage (31) correspondant à la longueur des implants. Si toutefois, la partie évidée (25) se bouchait, la conception en deux parties du foret permet le démontage, le nettoyage, puis la remise en service de celui-ci. Ledit foret peut être coiffé par un joint (26) qui vient se loger sur le mandrin (23). Ce joint est destiné à absorber les vibrations du forage.

Enfin, l'utilisation du système implantable décrit ci-dessus peut comporter les étapes suivantes :
– le fait que le filetage interne (3) communicant avec l'ouverture supérieure (4) du corps d'implant (1), soit combiné avec un mécanisme sixpans femelle (8) présente l'avantage de pouvoir réaliser la mise en place du corps d'implant (1) dans l'os maxillaire de manière simple. En effet, on incorpore dans ledit filetage interne (3) un dispositif de positionnement constitué par un dispositif sixpans mâle (32) tel que représenté sur la figure 8, permettant de mettre en place le corps d'implant dans l'os maxillaire à l'aide d'une clef à cliquet approprié puis le dispositif sixpans mâle (32) est ensuite enlevé par un simple geste vers le haut.

De plus, le mandrin de la clef à cliquet permettant de mettre en place le corps d'implant, présente un repère permettant d'orienter la partie évidée (6) en position intra-osseuse/mésio-distale afin de faciliter la restructuration et le vascularisation osseuse.

De façon préférentielle, le système sixpans mâle-femelle (8,32) selon l'invention, est asymétrique. De cette manière, la dispositif de reconstruction prothétique destiné à être vissé ou scellé dans de sixpans asymétrique femelle (8) est repositionné dans sa position exacte lors des manipulations.

Par ailleurs, un autre aspect de la présente invention est constitué par le fait que le corps d'implant peut être impacté (figure 3) et non pas vissé (figure 1). En effet, selon la figure 1, le corps d'implant (1) est entouré par un filetage extérieur (5) constitué par un pas de vis qui permet le vissage du corps d'implant (1) dans la mâchoire. Cependant, le vissage du corps d'implant (1) nécessite la présence d'une quantité d'os suffisante. C'est pourquoi, lorsque l'os de la mâchoire est trop étroit, le filetage extérieur (5) est remplacé par une série d'épaulements superposés (12).

La fixation de l'implant dans l'os maxillaire est alors réalisée par impactage du fait du relief desdits épaulements (12). De cette manière, les parois de la loge implantaire sont moins sollicitées, ce qui évite la fragilisation de l'os maxillaire.

De plus, la présente invention peut être employée avec une tête d'implant résiliente pouvant être utilisée dans la technique des implants (1), tandis que la partie haute et lisse de cette dite vis (33) est partiellement recouverte d'un anneau amortisseur (34) de manière à ménager entre la tête (35) de ladite vis (33) et le sommet (36) dudit anneau amortisseur (34) un espace destiné au maintien d'une barre de solidarisation (37).

De cette manière, la barre de solidarisation (37) repose sur les anneaux amortisseurs (34) de tous les implants, ce qui permet ainsi d'assurer une certain mobilité physiologique analogue à celle des organes dentaires.

Par conséquent, le procédé d'utilisation de cette dite tête d'implant résiliente (9) est adaptée à la technique des implants pour édentés totaux, une barre de solidarisation (37) des différents implants entre eux étant bloquée à la fois par l'anneau amortisseur (34) et la tête (35) de la vis (33) de chaque tête d'implant résiliente (9).

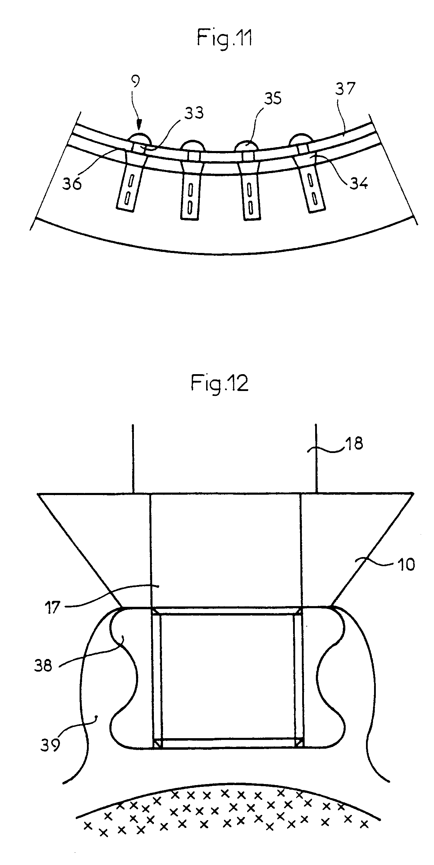

Dans un autre mode d'utilisation, on peut utiliser ladite tête d'implant résiliente (9) dans la technique des implants juxtaosseux. A cet effet, ladite base cylindrique (17) taraudée est bloquée selon la figure 12 dans un anneau métallique (38) pré-fabriqué, lui-même noyé dans la masse métallique de l'implant juxta-osseux (39) lors de la préparation en laboratoire de prothèse dentaire.

Bien entendu, l'invention n'est pas limitée aux modes de réalisations décrits ci-dessus et on peut y apporter de nombreuses modifications sans pour cela sortir du cadre de l'invention.

## Revendications

1. Système implantable de support pour prothèse dentaire destiné à être mis en place dans une loge implantaire conçue à partir d'un matériel rotatif, comportant d'une part, un corps d'implant (1) constitué par un tube cylindrique (2) présentant un filetage interne (3) dans son ouverture supérieure (4), combiné à un mécanisme sixpans femelle asymétrique (8), une partie évidée (6) occupant toute la largeur dudit tube cylindrique (2) et le maximum de la hauteur comprise entre le fond dudit filetage interne (3) et la partie apicale dudit tube cylindrique (2) ainsi qu'un filetage extérieur (5) et d'autre part, une tête d'implant destinée à être vissée dans ledit' filetage interne (3) ou scellée dans le puits sixpans asymétrique (8) du corps d'implant (1), caractérisé en ce que chacun des bords verticaux (13) de la partie évidée (6) est constitué par un méplat (14) tandis que le filetage extérieur (5) dudit tube cylindrique (2) débute à au moins 2,3 mm sous l'ouverture supérieure (4) dudit tube (2) afin de ménager une partie extérieure et supérieure (15) dont l'état de surface est poli-miroir, cette partie extérieure et supérieure (15) étant de forme légèrement évasée vers le haut.

2. Système implantable suivant la revendication 1, caractérisé en ce que ledit filetage extérieur (5) dudit tube cylindrique (2) présente un pas de vis au moins égal à 1,25 mm.

3. Système implantable selon la revendication 2, caractérisé en ce que ledit filetage extérieur (5) est d'une dimension permettant que le corps d'implant (1) puisse être mis en place par auto-taraudage dans la loge implantaire.

4. Système implantable selon l'une quelconque des revendications 2 à 3, caractérisé en ce que les spires (16) constituant ledit filetage extérieur (5) du tube cylindrique (2) présentent un relief tronqué.

5. Système implantable selon la revendication 1, caractérisé en ce que ledit filetage extérieur (5) est remplacé par une série d'épaulements superposés (12) permettant l'impactage du corps de l'implant (1).

6. Système implantable selon l'une quelconque des revendications 1 à 5, caractérisé en ce qu'un orifice de décompression (20) situé à la partie apicale du corps d'implant (1) fait communiquer la partie évidée (6) du corps d'implant (1) avec le fond du puits osseux.

7. Système implantable selon l'une quelconque des revendications 1 à 4 et 6, caractérisé en ce qu'il comporte un dispositif de positionnement constitué par un dispositif sixpans mâle (32) correspondant au sixpans femelle (8) et muni d'un repère d'orientation afin que ladite partie évidée (6) dudit corps d'implant (1) soit dans la direction mésiodistale à l'intérieur de la loge implantaire, ledit dispositif sixpans mâle (32) pouvant être actionné avec une clef à cliquets ou à main de manière à ce que le corps d'implant pénètre dans la néo-alvéole dans sa forme vissée et autotaraudante.

8. Système implantable selon la revendication 5, caractérisé en ce qu'il comporte un impacteur métallique dont l'une des extrémités pénètre dans le filetage interne (3) de sorte que le corps de l'implant puisse être mis en place à coups de maillet.

9. Système implantable selon la revendication 1, caractérisé en ce que ledit corps d'implant est combiné à une tête d'implant résiliente (9) constituée d'une base cylindrique (17) taraudée dans sa partie inférieure, destinée à être vissée dans ledit filetage interne (3) dudit corps d'implant (1), cette dite base cylindrique (17) étant surmontée d'un moignon cylindrique (18) de support de prothèse muni de deux éléments amortisseurs (10, 11).

10. Système implantable selon la revendication 9, caractérisé en ce que ladite tête d'implant résiliente (9) est munie d'un premier élément amortisseur (10) constitué d'une bague en tronc de cône renversé entourant la partie cylindrique non taraudée de ladite base cylindrique (17) tandis que ledit second élément amortisseur (11) est constitué par un anneau disposé au-dessus dudit moignon cylindrique (18) de support de prothèse, ce dit second élément amortisseur (11) entourant ainsi la tête d'une vis de fixation (19) de la suprastructure prothétique.

11. Matériel rotatif pour la conception de la loge implantaire destinée à loger ledit système implantable vissé et auto-taraudé ou impacté selon l'une quelconque des revendications 1 à 10, caractérisé en ce qu'il est constitué d'un foret (21) à langue d'aspic cruciforme, muni intérieurement d'un canal d'irrigation (22).

12. Matériel rotatif selon la revendication 11, caractérisé en ce que ce dit foret (21) est constitué d'un mandrin (23) muni intérieurement, sur toute sa longueur, d'un canal d'irrigation (22), ce dit mandrin (23) étant recouvert, dans sa partie inférieure, d'un cylindre (24) évidé de façon à présenter une section transversale cruciforme tandis que sa partie extrême inférieure comporte des lames avec des biseaux (27, 28) dont l'inclinaison assure la coupe de l'os.

13. Système implantable selon l'une quelconque des revendications 1 à 6, caractérisé en ce que le corps d'implant (1) est combiné à une tête d'implant résiliente (9) constituée par une vis (33) dont la partie basse taraudée est introduite dans ledit filetage interne (3) dudit corps d'implant (1) tandis que la partie lisse de ladite vis (33) est partiellement recouverte d'un anneau amortisseur (34) de manière à ménager entre la tête (35) de ladite vis (33) et le sommet (36) dudit anneau amortisseur (34), un espace destiné au maintien d'une barre de solidarisation (37).

## Patentansprüche

1. Implantat-Trägersystem für Zahnprothesen, das ausgelegt ist für das Einsetzen in eine Implantatunterbringung, die aus einem Drehmaterial gebaut ist, das einerseits einen Implantatkörper (1) enthält bestehend aus einer Zylinderröhre (2) mit einem Innengewinde (3) in seiner oberen Öffnung (4), in Verbindung mit einem asymmetrischen, weiblichen Sechskantapparat (8), einer Aussparung (6), die die gesamte Breite der besagten Zylinderröhre (2) und das Maximum der Höhe zwischen dem tiefsten Teil des besagten Innengewindes (3) und dem Spitzenteil der besagten Zylinderröhre (2) einnimmt, sowie ein Außengewinde (5) und andererseits einen zum Einschrauben in das besagte Innengewinde (3) oder zum Einschließen in die asymmetrische Sechskanthöhle (8) des Implantatkörpers (1) bestimmter Implantatkopf, der dadurch gekennzeichnet wird, daß jede der senkrechten Kanten (13) der Aussparung (6) aus einer Abflachung (14) besteht, wohingegen das Außengewinde (5) der besagten Röhre (2) mindestens 2,3 mm unter der Oberöffnung (4) der besagten Zylinderröhre (2) anfängt, um ein Außen- und Oberteil (15) auszusparen, dessen Oberfläche spiegelpoliert ist, wobei dieser Außen- und Oberteil (15) nach oben hin eine leicht ausgeweitete Form hat.

2. Implantierbares System nach Patentanspruch 1 dadurch gekennzeichnet, daß das besagte Außengewinde (5) der genannten Zylinderröhre (2) einen mindestens 1,25 mm entsprechenden Gewindegang hat.

3. Implantierbares System nach Patentanspruch 2 dadurch gekennzeichnet, daß besagtes Außengewinde (5) eine derartige Abmessung hat, daß der Implantatkörper (1) durch Selbstschneidung in seine Implantatunterbringung eingesetzt werden kann.

4. Implantierbares System nach irgendeinem der Patentansprüche 2 bis 3 dadurch gekennzeichnet, daß die das genannte Außengewinde (5) der Zylinderröhre (2) bildende Gewindegänge (16) ein abgestumpftes Relief haben.

5. Implantierbares System nach Patentanspruch 1 dadurch gekennzeichnet, daß besagtes Außengewinde (5) ersetzt wird durch eine Reihe von übereinandergelegten Ansätzen (12), die das Einsetzen des Implantatkörpers (1) ermöglichen.

6. Implantierbares System nach irgendeinem der Patentansprüche 1 bis 5 dadurch gekennzeichnet, daß eine Druckverminderungsöffnung (20), die sich am apikalen Teil des Implantatkörpers (1) befindet, den ausgesparten Teil (6) dieses Körpers (1) mit dem Grund der Knochenhöhle verbindet.

7. Implantierbares System nach irgendeinem der Patentansprüche 1 bis 4 und 6 dadurch gekennzeichnet, daß es eine Positioniervorrichtung enthält, die besteht aus einer männlichen Sechserkante (32), die der weiblichen Sechserkante (8) entspricht und mit einer Orientierungsmarkierung versehen ist, damit der genannte Aussparungsteil (6) des besagten Implantatkörpers (1) sich in der mesiodistalen Richtung innerhalb der Implantatunterbringung befindet, wobei die besagte männliche Sechskantvorrichtung (32) durch einen Knarrenschlüssel oder von Hand derart bewegt werden kann, daß der Implantatkörper in das neue Zahnfach in seiner geschraubten und selbstschneidenden Form eindringt.

8. Implantierbares System nach Patentanspruch 5 dadurch gekennzeichnet, daß es einen Metallimpinger enthält, wovon ein Außenende derart in das Innengewinde (3) eindringt, daß der Implantatkörper mit Holzhammerschlägen eingesetzt werden kann.

9. Implantierbares System nach Patentanspruch 1 dadurch gekennzeichnet, daß der genannte Implantatkörper mit einem schlagfesten Implantatkopf (9) kombiniert ist, der aus einer Zylinderbasis (17) mit geschnittenem Innengewinde in seinem Unterteil besteht, das bestimmt ist zum Einschrauben in das genannte Innengewinde (3) des genannten Implantatkörpers (1), wobei diese besagte Zylinderbasis (17) durch einen mit zwei Dämpfungsteilen (10, 11) versehenen Zylinderstumpf (18) des Prothesenträgers überhöht wird.

10. Implantierbares System nach Patentanspruch 9 dadurch gekennzeichnet, daß der genannte schlagfeste Implantatkopf (9) mit einem ersten Dämpfungsteil (10) versehen ist, das besteht aus eimem umgekehrten Konusstumpfring, welcher den zylindrischen Teil ohne Innengewinde der genannten Zylinderbasis (17) umgibt, wohingegen das genannte zweite Dämpfungsteil (11) besteht aus einem Ring, der oberhalb des besagten Zylinderstumpfs (18) des Prothesenträgers angeordnet ist, und wobei dieses genannte zweite Dämpfungsteil (11) so den Kopf einer Befestigungsschraube (19) des Prothesenüberbaus umgibt.

11. Drehmaterial für die Fertigung der Implantatunterbringung, das ausgelegt ist für die Unterbringung des verschraubten und selbstgeschnittenen oder eingeschlagenen besagten Implantatsystems nach irgendeinem der Patentansprüche 1 bis 10 dadurch gekennzeichnet, daß es aus einem kreuzförmigen Spitzbohrer (21) besteht, der innen mit einem Bewässerungskanal (22) versehen ist.

12. Drehmaterial nach Patentanspruch 11 dadurch gekennzeichnet, daß der besagte Bohrer (21) besteht aus einem Dorn (23), der innen versehen ist - auf seiner gesamten Länge - mit einem Bewässerungskanal (22), dabei wird dieser besagte Dorn (23) in seinem unteren Teil durch einen derart ausgesparten Zylinder (24) verdeckt, daß dieser einen kreuzförmigen Querschnitt hat, wohingegen sein unterer Außenteil Lamellen mit Abschrägungen (27, 28) enthält, deren Neigung die Knochendurchtrennung gewährleistet.

13. Implantierbares System nach irgendeinem der Patentansprüche 1 bis 6 dadurch gekennzeichnet, daß der Implantatkörper (1) mit einem schlagfesten Implantatkopf (9) kombiniert ist, der besteht aus einer Schraube (33), deren tiefer Teil mit geschnittenem Innnengewinde in den genannten inneren Gewindegang (3) des besagten Implantatkörpers (1) eingeführt wird, wohingegen der glatte Teil der genannten Schraube (33), die teilweise durch einen Dämpfungsring (34) derart verdeckt wird, daß zwischen dem Kopf (35) der besagten Schraube (33) und dem Hochpunkt (36) des genannten Dämpfungsrings (34) ein Raum ausgespart wird, der zum Halten einer Verbindungsstange (37) bestimmt ist.

**Claims**

1. An implant system for supporting dental prosthesis meant for being placed in an implant chamber designed with a rotary equipment comprising, on the one hand, an implant body (1) consisting of a cylindrical tube (2) having an inner threading (3) in the upper opening (4), combined with an asymmetrical hexagonal female mechanism (8), a hollowed part (6) filling the whole length of said cylindrical tube (2) and most of the height included between the bottom of said inner threading (3) and the apical part of said cylindrical tube (2) as well as an outer threading (5), and on the other hand, an implant head to be screwed in said inner threading (3) or sealed in the asymmetrical hexagonal hole (8) of the implant body (1), characterized in that each vertical edge (13) of the hollowed part (6) consists of a flat surface (14) whereas the outer threading (5) of said cylindrical tube (2) starts at least 2,3 mm. under the upper opening (4) of said tube (2) in order to provide an outer and upper part (15) whose surface is high polished, such outer and upper part (15) being slightly flare-shaped upwards.

2. An implant system according to claim 1, characterized in that said outer threading (5) of said cylindrical tube (2) has a thread pitch at least equal to 1,25 mm.

3. An implant system according to claim 2, characterized in that the dimensions of said outer thread (5) allow the implant body (1) to be placed in the implant chamber by means of self-threading.

4. An implant system according to any one of claims 2 to 3, characterized in that the spires (16) forming said outer threading (5) of the cylindrical tube (2) show a truncated relief.

5. An implant system according to claim 1, characterized in that said outer threading (5) is replaced by superimposed collars series (12) allowing the implant body (1) impact.

6. An implant system according any one of claims 1 to 5, characterized in that a decompression outlet (20) placed at the apical part of the implant body (1) make the hollowed part (6) of the implant body (1) communicate with the bottom of the bone hole.

7. An implant system according to any one of claim 1 to 4 and 6, characterized in that it comprises a positioning device consisting of an hexagonal male device (32) which corresponds to the hexagonal female device (8), and being equipped with an orientation mark so that said hollowed part (6) of the implant body (1) be in the mesodistal direction inside the implant chamber, said hexagonal male device (32) being activated with a ratchet handle or a handle wrench so that the implant body enters the neo-cell by screwing and self-cutting.

8. An implant system according to claim 5, characterized in that it comprises a metal impact separator one end of which penetrates in the inner threading (3) so that the implant body can be placed with hammer strokes.

9. An implant system according to claim 1, characterized in that said implant body is combined with a resilient implant head (9) consisting of a cylindrical base (17) which is threaded in the lower part and designed to be screwed in said inner threading (3) of the implant body (1), such cylindrical base (17) being topped by a cylindrical stump (18) for supporting the dental prosthesis, said stump being equipped with two damping devices (10, 11).

10. An implant system according to claim 9, characterized in that said resilient implant head (9) is equipped with a first damping device (10) consisting of an inverted truncated cone shaped ring encompassing the non-threaded cylindrical part of said cylindrical base (17), whereas said second damping device (11) consists of a ring placed above said cylindrical stump (18) supporting the dental prosthesis, said second damping device (11) encompassing the fastening screw head (19) of the prosthetic superstructure.

11. A rotary equipment for designing the implant chamber meant for housing said implant system which is screwed, self-threaded or impacted according to any one of claims 1 to 10, characterized in that it consists in a ratchet borer (21) provided with an irrigation canal (22) on the inside.

12. A rotary equipment according to claim 11, characterized in that said borer (21) comprises a chuck (23) provided with an irrigation canal (22) along the whole length, said chuck (23) being covered, on its lower part, with a hollowed cylinder (24) so that it has a cruciform cross section whereas the lower end part holds blades with bezels (27, 28) whose angle ensures the cutting of the bone. 13) An implant system according to any one of claims 1 to 6, characterized in that the implant body (1) is combined with a resilient implant head (9) consisting of a screw (33) whose lower threaded part is inserted into said inner threading (3) of the implant body (1) whereas the smooth part of said screw (33) is partly covered with a damping ring (36) so as to provide a space meant for holding an interlocking bar (37) between the head (35) of said screw (33) and the top (36) of said damping ring (34).

Fig.1

Fig.2

Fig.3

Fig.4

Fig. 5

Fig. 6

Fig. 7

Fig. 8

Fig. 9

Fig.10

Coupe A.A

A

21

Coupe aa

30

29

Coupe bb

30

29

Coupe cc

29

30

30

29

a

a

b

b

c

c

A

4

23

22

26

31

24

25

22

27

28

Fig.11

Fig.12